# EUROPEAN PATENT SPECIFICATION

(11) **EP 2 853 609 B1**
(45) Date of publication and mention of the grant of the patent: **04.10.2017**
(21) Application number: 14197596.1
(22) Date of filing: 04.02.2011
(51) Int. Cl.: C21D 8/04, B23K 11/11, B23K 11/34, C21D 1/09, C21D 9/00, C21D 9/50, C21D 1/673

(54) **METHOD OF MANUFACTURE OF A STRUCTURAL COMPONENT OF A VEHICLE**
VERFAHREN ZUR HERSTELLUNG EINES BAUTEILS EINES FAHRZEUGS
PROCÉDÉ DE FABRICATION D'UN COMPOSANT STRUCTUREL D'UN VÉHICULE

(30) Priority: 19.04.2010 ES 201030563
(43) Date of publication of application: 01.04.2015
(62) Divisional of application: 11716971.4
(73) Proprietor: Autotech Engineering A.I.E., 08635 Sant Esteve Sesrovires (ES)
(72) Inventor: Garcia, Michel, 08800 Sitges (ES); Vila Ferrer, Elisenda, 08904 Hospitalet de Llobregat (ES); Perarnau Ramos, Francesc, 08201 Sabadell (ES)
(74) Representative: ZBM Patents - Zea, Barlocci & Markvardsen

(56) References cited:
- DE-A1- 19 743 802
- US-A1- 2004 003 874
- US-A1- 2004 201 256
- US-A1- 2009 320 968
- US-A1- 2010 086 803
- US-A1- 2011 016 719
- DATABASE WPI Week 198825 Thomson Scientific, London, GB; AN 1988-168291 XP002643974, & DD 253 551 A3 (AS USSR LASERS TECH) 27 January 1988 (1988-01-27)

## Description

### Technical Field of the Invention

The invention relates to a method for the manufacture of a structural component of a vehicle, starting from a high strength or ultra-high strength steel plate with a protective coating. The structural component of a vehicle can be, by way of example, any one of the following open list: a window reinforcement, a bumper beam, an aperture upright reinforcement, a central pillar reinforcement or a door reinforcement. The method comprises the operation of subjecting the plate or sheet to a prior hot stamping formation.

### Background of the Invention

In the automotive field, the use of hot stamping method for forming structural components of the vehicle is widespread. A homogenous change in the microstructure of the starting metal material and forming the desired finished piece are achieved simultaneously during this method.

Thus, the microstructure of 22MnB5 steel plates of a thickness between 0.8 and 2.5 mm, for example, frequently used in the automotive field due to their mechanical performance after stamping, is typically converted in two steps from ferrite-perlite to austenite by means of a specific heat treatment followed by a martensitic phase transformation during cooling in the stamping presses.

For the purpose of obtaining pieces with localized zones having different hardness and ductility, variants of the typical methods by means of which localized zones of the parts obtained do not show a pure martensitic microstructure, causing the finished piece to be slightly more ductile than the parts obtained following the typical method, have recently been disclosed.

This is achieved by reducing the cooling rate, only in those selected zones, to a ratio under the required rate of 27 K/s, which is essential for reaching a pure martensitic microstructure.

To put these variants of the typical methods into practice, the patent documents DE 102005032113 and EP 1715066 propose the use of presses the pressing plates or bodies of which are provided in localized zones with heating means to heat the desired zones of the piece during the manufacture, as well as with insulating means so that the heat energy transmitted to said zones is controlled and localized.

An objective of the present invention is an alternative method for achieving the same result.

Another objective of the present invention is a method that does not require changing tools for the hot stamping operation to be put into practice. In other words, it does not require replacing the presses which have been used until now with presses with sectors demarcated by insulating elements and that incorporate heating means.

According to another aspect of the invention, it is desirably for the alternative method to be of application for obtaining structural components obtained from a USIBOR® 1500 P steel plate.

US 2004/201256 A1 discloses a crush rail or other structural member of a vehicle provided with crush triggers. The crush triggers are formed by heating localized areas of the crush rail or other part and allowing them to cool slowly to provide increased ductility and reduced strength in a localized region. The crush rail is designed to collapse in a series of convolutions in a regular and repeated pattern.

DE 197 43 802 A1 discloses a shaped low alloy steel part, having regions of increased ductility, which is produced by heating regions of a sheet of the steel to 600-900 deg C in less than 30 seconds, before or after forming and hardening in press tooling.

US 2011/0016719, published after the priority date and before the filing date of the present patent application, discloses a method for fabricating a member of a vehicle by hot stamping and a secondary heat treatment using a laser beam.

### Disclosure of the Invention

For the purpose of providing a solution to the problems raised, a method for the manufacture of a structural component of a vehicle, such as an automotive vehicle is disclosed. The method according to the invention comprises the operation of subjecting a high strength or ultra-high strength steel plate or sheet, with a thickness comprised between 1 and 3 mm and provided with a protective coating, to a prior hot stamping formation operation. The protective coating is silicon and aluminium-based which protects the plate from the effects of corrosion, decarburization, oxidation during heat treatments to which the plate can be subjected, etc.

The method is essentially characterized in that it comprises the subsequent operation of subjecting at least one localized and previously selected zone of the hot stamped plate or sheet to a subsequent heat treatment, irradiating it with a diode laser beam of a power comprised between 500 W and 6 kW until reaching a temperature comprised between 400 °C and 900 °C, then cooling at a controlled cooling rate equal to or less than 10 °C/s in order to change its microstructure, providing said at least one localized zone with an intentionally lower martensite content and accordingly with a lower yield strength and greater elongation in comparison with those of its adjacent zones not subjected to said heat treatment.

According to an embodiment of the invention, the subsequent heat treatment in the at least one localized zone is done by marking out a predetermined figure thereon by means of a diode laser beam with an optic having a parallelepiped cross-section, the rate of advance of the laser beam being from 4 a 20 mm/s.

In a preferred variant, the method comprises the operation of irradiating one and the same zone, or at least part of it, more than once with the diode laser beam.

According to another feature of the method, the at least one localized zone is provided with a microstructure mostly or entirely made up of ferrite, perlite, tempered martensite or a mixture of any of the foregoing by means of said radiation and subsequent cooling.

According to the invention, the steel plate or sheet from which the finished component is obtained is a boron steel plate or sheet, and its tensile strength measured after hot forming is comprised between 1200 MPa and 1600 MPa. In addition, according to the invention, the tensile strength of the at least one localized zone of the finished component after the irradiation by the diode laser beam and the cooling has a value between 30% and 50% of the tensile strength measured after its hot forming and prior to being subjected to the irradiation by the high power diode laser beam. Therefore, the tensile strength of the at least one localized zone of the finished component after the irradiation by the diode laser beam and the cooling has a value between 360 MPa and 800 MPa, corresponding to 30% of 1200 MPa and 50% of 1600 MPa, respectively.

The at least one localized zone can be irradiated in the form of specks, stains or strips adjacent to one another.

The application of the diode laser in the at least one localized zone followed by the cooling process causes the mentioned change of the microstructure of the at least one localized zone, decreasing its martensite content in the localized zone, and therefore, decreasing its yield strength and increasing its elongation, in comparison with the rest of the part, which makes said localized zone an energy absorption zone in the event of a collision.

According to a second aspect of the disclosure, there is disclosed a structural component of a vehicle, obtained from a high strength (HSS) or ultra-high strength (UHSS) steel plate with a thickness comprised between 1 and 3 mm and provided with a protective coating, which having been subjected to a prior hot stamping formation operation, comprises at least one localized zone. Said at least one localized zone is not a zone which has been laser welded to join the structural component to an adjacent part of another component of similar features. Said at least one localized zone of the structural component has been selectively subjected, after the hot stamping formation, to a heat treatment by means of a high power diode laser beam followed by a cooling step at room temperature or at a controlled cooling rate equal to or less than 10 °C/s to change its microstructure, providing said at least one localized zone with a martensite content intentionally less than that of the rest of the part. Advantageously, by reducing the martensite content in the localized zone, the yield strength of said zone is reduced and its elongation increased, which is favorable for energy absorption in the event of a collision.

According to another feature of the disclosure, the structure of said at least one localized zone is ferrite and perlite based, having been eliminated the martensite structure obtained of the hot stamping formation.

In an embodiment of the disclosure the component, comprises several localized zones, each in the form of specks, stains or strips adjacent to one another. Those specks, stains or strips are in a number sufficient for modifying the mechanical properties of said localized zones of the plate, such as its tensile strength, when the component is integrated in a complex structure, for example the structure of an automotive vehicle.

According to the invention, the tensile strength of the localized zone or localized zones of the finished component has a value between 30% and 50% of the tensile strength measured after its hot forming and prior to being subjected to the heat treatment by means of the diode laser beam.

According to the invention, the plate from which the finished component is obtained is boron steel plate, and its tensile strength measured after hot forming is comprised between 1200 MPa and 1600 MPa.

According to the invention, the protective coating of the plate is aluminium and silicon coating.

### Brief Description of the Drawings

A structural component in the form of a central reinforcement of an automotive vehicle, another in the form of an upright between the back door and the plate glass, and different variants of a localized zone, selectively irradiated with a laser beam for putting the invention into practice are illustrated in the attached drawings by way of non-limiting example. Specifically:
Figure 1 is a plan view of a central reinforcement in which a part which has been selectively irradiated with a laser beam according to the invention has been indicated by shading;
Figure 2 is a plan view of another central reinforcement in which four parts which have been selectively irradiated with a laser beam according to the invention have been indicated by shading;
Figure 3 is a schematic view of several forms that the laser beam used to irradiate the localized zones can have;
Figures 4 and 5 show two possible variants for the formation of localized zones irradiated with a laser beam intended for modifying the mechanical properties of the stamped plate, with a wave-shaped distribution and with another distribution based on adjacent square dots forming a zigzag line;
Figures 6 and 7 show in detail two examples of laser irradiation of one of the localized side zones of Figure 2 , presenting in both cases a linear distribution of irradiated dots separate from one another, with an oval shape and with a square shape, respectively.

### Embodiments

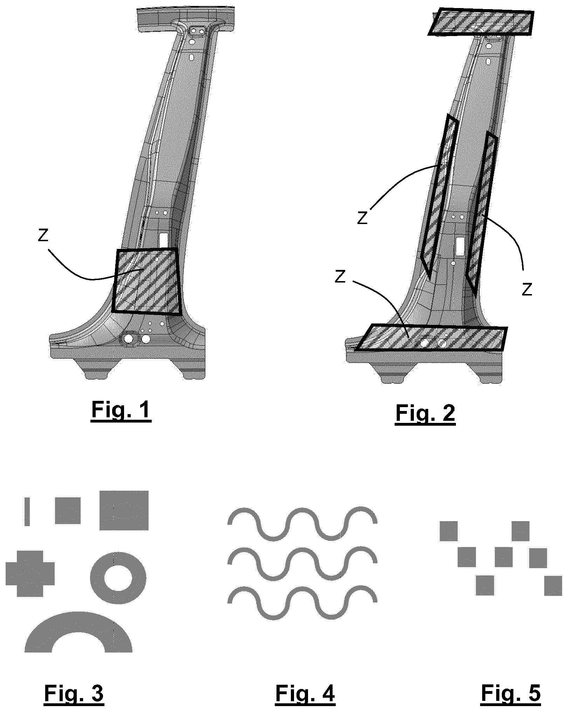

Figure 1 depicts a central reinforcement component of an automotive vehicle in which a part of the component which comprises at least one localized zone Z which has been subjected to a second heat treatment to change its microstructure has been indicated in the form of shading for the reader's understanding. The part of the central reinforcement component that is not shaded has not been subjected to any heat treatment after the conventional hot stamping method for forming the component and therefore, its original microstructure has been transformed into a martensite microstructure due to the hot stamping operation. At least part of the surface of the shaded zone has been subjected, after hot stamping the component, to a second heat treatment irradiating it with a diode laser beam of a power comprised between 500 W and 6 kW until reaching a temperature comprised between 400 °C and 900 °C, the component then having been left to cool in a controlled manner at a rate comprised between 1 °C/s and 10 °C/s, providing said localized zone Z with an intentionally lower martensite content, and accordingly with a lower yield strength and greater elongation, in comparison with those of its adjacent zones not subjected to said heat treatment, not shaded in Figure 1. Unlike Figure 1 , in Figure 2 the central reinforcement of an automotive vehicle comprises a total of four localized zones Z which have been subjected to the same treatment described for Figure 1 .

The heat treatment applied by means of the diode laser beam followed by the mentioned cooling is an improvement in the performance in the event of collision of the structural components of the vehicles.

In a first embodiment, the component is formed by a hot stamped part from original USIBOR® 1500 P steel sheet 1.7 mm thick, with a protective silicon and aluminium-based coating, and the shaded part of the component comprises a single localized zone Z of 200 cm² which was subsequently irradiated with a 6 KW power laser beam, at a rate of advance of 8 mm/s, the laser format being of the type which irradiates surfaces based on dots with a variable surface of approximately 1800 mm² and its temperature having been raised until reaching 680 °C. After reaching said temperature, the component was left to cool at room temperature.

Tests conducted with this practical example allowed obtaining a finished component with a tensile strength value of the metal of 740 MPa, which represents a 50% reduction with respect to the tensile strength of a similar component lacking a localized zone Z subjected to a heat treatment after hot stamping the component. With respect to the elongation, an A80 value of 11% was obtained with the laser treatment, which translates into a 120% elongation increase with respect to the elongation of a similar component lacking localized zone Z subjected to a heat treatment after hot stamping the component.

In a second embodiment, the component was formed by a hot stamped part from original USIBOR® 1500 P steel sheet 1.3 mm thick. The shaded part of the component comprised a single localized zone Z irradiated with a 500 W power laser beam at a rate of advance of 8 mm/s, the irradiated surface being 100 cm² and having a laser format in the form of dots with a surface of approximately 510 mm². The temperature of the laser during irradiation reached 650 °C and the component was then left to cool at room temperature. Tests conducted with this practical example allowed obtaining a finished component with a tensile strength value of the metal of 623 MPa, which represents a 58% reduction with respect to the tensile strength shown by a similar component lacking localized zone Z subjected to a heat treatment after hot stamping the component. With respect to elongation, an A80 value of 6% was achieved with the laser treatment, which translates into a 20% elongation increase with respect to the elongation of a similar component lacking a localized zone Z subjected to a heat treatment after hot stamping the component.

Tests similar to previous tests performed in other components subjected to the same described method, irradiating a localized zone Z with a diode laser beam of a power comprised between 500 W and 6 kW, reaching a temperature comprised between 650 °C and 680 °C and using a laser format in the form of dots with a surface comprised between 1800 mm² and 510 mm², then leaving the component to cool at room temperature, have allowed obtaining optimal process values in the yield strength reduction and in the elongation increase, specifically, a tensile strength value of the metal of 590 MPa and an A80 value of 11% in the treated zone of the component.

To perform the tempering by means of the diode laser, an optic which can magnify the laser beam to the suitable size is necessary. Since the energy distribution is constant in the entire laser beam, the entire zone magnified by the optic applies the same temperature on the localized zone Z or localized zones Z. This allows using optics of different shapes, for example 8 mm x 10 mm, 8 mm x 20 mm, 15 mm x 30 mm rectangles, etc.

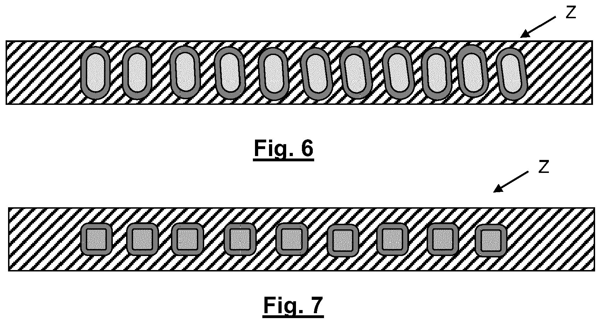

Therefore, the localized zone Z or zones Z irradiated with the laser can be irradiated according to different distribution patterns, like those shown by way of example in Figures 4, 5, 6 and 7, and according to the format of the laser beam used (see Figure 3).

## Claims

1. A method for the manufacture of a structural component of a vehicle, such as an automotive vehicle, starting from a boron steel plate or sheet having a thickness between 1 and 3 mm with an aluminium and silicon coating, comprising the operation of subjecting the plate or sheet to a prior hot stamping formation, wherein the steel plate or sheet has a tensile strength measured after hot forming between 1200 MPa and 1600 MPa, and
the method comprises the subsequent operation of subjecting at least one localized and previously selected zone of the hot stamped plate or sheet to a subsequent heat treatment, the localized zone being selected for energy absorption in the event of a collision, by irradiating the localized zone with a diode laser beam of a power comprised between 500 W and 6 kW until reaching a temperature comprised between 400 °C and 900 °C, and
then cooling the hot stamped plate or sheet at a controlled cooling rate equal to or less than 10°C/s in order to change a microstructure of the localized zone, providing said at least one localized zone with an intentionally lower martensite content and accordingly with a lower yield strength and greater elongation in comparison with those of its adjacent zones not subjected to said heat treatment,
the tensile strength of the at least one localized zone of the finished component after the irradiation by the diode laser beam and the cooling having a value between 30% and 50% of the tensile strength measured after hot forming and prior to being subjected to the irradiation by the diode laser beam.

2. The method according to claim 1, wherein the subsequent heat treatment in the localized zone is done by marking out a predetermined figure thereon by means of a diode laser beam with an optic having a parallelepiped cross-section, the rate of advance of the laser beam being from 4 to 20 mm/s

3. The method according to claim 2, wherein the irradiation with a diode laser beam carried out in the subsequent heat treatment comprises the operation of irradiating one and the same localized zone, or at least part of it, more than once with the diode laser beam.

4. The method according to any one of claims 1 to 3, wherein the microstructure of
the localized zone is mostly or entirely made up of ferrite, perlite, tempered martensite or a mixture of any of the foregoing.

5. The method according to any one of claims 1 to 3, wherein the at least one localized zone is irradiated in the form of specks, stains or strips adjacent to one another.

## Patentansprüche

1. Ein Verfahren zur Herstellung von einem strukturellen Bauteil eines Fahrzeuges, wie zum Beispiel eines Kraftfahrzeuges, ausgehend von einer mit Aluminium und Silizium beschichteten Bohrstahlplatte oder Bohrstahlblech mit einer Dicke von zwischen 1 und 3 mm, umfassend die Aussetzung der Platte bzw. des Bleches einer vorherigen Formung durch Presshärtung, wobei die Stahlplatte bzw. das Stahlblech eine Zugfestigkeit gemessen nach der Warmverformung hat, die bei zwischen 1200 MPa und 1600 MPa liegt, und
wobei das Verfahren die darauf folgende Aussetzung von mindestens einem örtlich festgelegten und zuvor ausgewählten Bereich der pressgehärteten Platte bzw. des pressgehärteten Blechs einer darauffolgenden Wärmebehandlung umfasst, wobei der örtlich festgelegte Bereich zur Energieabsorption im Fall eines Stoßes ausgewählt ist, indem der örtlich festgelegte Bereich mit einem Diodenlaserstrahl einer Leistung von zwischen 500 W und 6 kW bestrahlt wird, bis eine Temperatur von zwischen 400 °C und 900 °C erreicht wird, und
die darauffolgende Abkühlung der pressgehärteten Platte bzw. des pressgehärteten Blechs bei einer kontrollierten Abkühlungsgeschwindigkeit von 10 °C/s oder geringer, um eine Mikrostruktur des örtlich festgelegten Bereichs zu verändern,
das Versehen des mindestens einen örtlich festgelegten Bereichs mit einem absichtlich geringeren Martensitgehalt und entsprechend einer geringeren Streckfestigkeit und einer höheren Streckdehnung im Vergleich zu denen von seinen angrenzenden Bereichen, die der Wärmebehandlung nicht unterzogenen worden sind,
wobei die Zugfestigkeit des mindestens einen örtlich festgelegten Bereichs des fertigen Bauteils nach der Bestrahlung mit dem Diodenlaserstrahl und der Abkühlung einen Wert von zwischen 30% und 50% der Zugfestigkeit gemessen nach der Warmverformung und vor der Bestrahlung mit dem Diodenlaserstrahl hat.

2. Das Verfahren nach Anspruch 1, wobei die darauffolgende Wärmebehandlung im örtlich festgelegten Bereich durch Markierung einer vorherbestimmten Figur auf dem Bereich mittels eines Diodenlaserstrahls mit einer Optik aufweisend einen spatförmigen Querschnitt erfolgt, wobei die Auffahrgeschwindigkeit des Laserstrahls von 4 bis 20 mm/s reicht.

3. Das Verfahren nach Anspruch 2, wobei die in der darauffolgenden Wärmebehandlung ausgeführte Diodenlaserbestrahlung die Bestrahlung von einem und demselben örtlich festgelegten Bereich, oder zumindest einem Teil davon, mehr als einmal mit dem Diodenlaserstrahl umfasst.

4. Das Verfahren nach einem der Ansprüche 1 bis 3, wobei die Mikrostruktur des örtlich festgelegten Bereichs überwiegend oder gänzlich aus Ferrit, Perlit, angelassenem Martensit oder einer Mischung aus einem davon besteht.

5. Das Verfahren nach einem der Ansprüche 1 bis 3, wobei der mindestens eine örtlich festgelegte Bereich in Form von aneinander angrenzenden Stellen, Flecken oder Streifen bestrahlt wird.

## Revendications

1. Un procédé de fabrication d'un composant structurel d'un véhicule, par exemple, d'un véhicule automobile, à partir d'une plaque ou d'une tôle en acier au bore d'une épaisseur d'entre 1 et 3 mm ayant un revêtement d'aluminium et de silice, comprenant l'opération de soumettre avant la plaque ou la tôle à un formage par estampage à chaud, dans lequel
la plaque ou la tôle en acier a une résistance à la traction mesurée après le formage à chaud d'entre 1200 MPa et 1600 MPa, et
le procédé comprenant l'opération postérieure de soumettre au moins une région localisée et sélectionnée auparavant de la plaque ou la tôle estampée à chaud à un traitement thermique postérieur, étant choisie la région localisée pour l'absorption d'énergie en cas de collision, en irradiant la région localisée avec un faisceau de diode laser d'une puissance d'entre 500 W et 6 kW jusqu'à atteindre une température d'entre 400 °C et 900 °C, et
refroidir alors la plaque ou la tôle estampée à chaud à une vitesse de refroidissement égale ou inférieure à 10 °C/s afin de modifier une microstructure de la région localisée,
douer ladite au moins une région localisée d'une teneur intentionnellement inférieure en martensite et conformément à une limite d'élasticité inférieure et à un allongement supérieur en comparaison avec ceux de ses régions contigües qui n'ont pas été soumises audit traitement thermique,
la valeur de la résistance à la traction de l'au moins une région localisée du composant fini après l'irradiation par le faisceau de diode laser et le refroidissement étant d'entre 30% et 50% de la résistance à la traction mesurée après le formage à chaud et avant de la soumettre à l'irradiation par le faisceau de diode laser.

2. Le procédé selon la revendication 1, dans lequel le traitement thermique postérieur dans la région localisée est effectué en marquant une figure prédéterminée sur celle-ci moyennant un faisceau de diode laser avec une optique d'une section de parallélépipède, la vitesse d'avancement du faisceau de laser étant de 4 à 20 mm/s.

3. Le procédé selon la revendication 2, dans lequel l'irradiation avec un faisceau de diode laser effectuée dans le traitement thermique postérieur comprend l'opération d'irradier une seule et même région localisée, ou au moins une partie de celle-ci, plus d'une fois avec le faisceau de diode laser.

4. Le procédé selon l'une quelconque des revendications 1 à 3, dans lequel la microstructure de la région localisée est pour la plupart ou entièrement réalisée en ferrite, perlite, martensite revenue ou un mélange d'une quelconque des précédentes.

5. Le procédé selon l'une quelconque des revendications 1 à 3, dans lequel l'au moins une région localisée est irradiée en forme de taches, de macules ou de bandes contigües les unes aux autres.
